# EUROPEAN PATENT SPECIFICATION

(11) **EP 1 469 689 B1**
(45) Date of publication and mention of the grant of the patent: **22.05.2013**
(21) Application number: 04252144.3
(22) Date of filing: 13.04.2004
(51) Int. Cl.: H04W 4/02, H04W 4/24, H04W 8/26

(54) **Providing location dependent services in a mobile telecommunications network**
Bereitstellen von positionsabhängigen Diensten in einem Mobilkommunikationsnetz
Fournir des services localisés dans un réseau de communication mobile

(30) Priority: 17.04.2003 GB 0308998
(43) Date of publication of application: 20.10.2004
(73) Proprietor: VODAFONE LIMITED, Newbury Berkshire RG14 2FN (GB)
(72) Inventor: Jones, Anne, Pangbourne, Berkshire RG8 7DZ (GB)
(74) Representative: Keston, David Arthur

(56) References cited:
- EP-A- 1 126 732
- WO-A-01/28270

## Description

The present invention relates to obtaining a location dependent service in a mobile telecommunication network.

Known systems with this object include methods described in published patent applications WO 01/28270 and EP 1,126,732.

WO 01/28270 describes a mobile station of a mobile communication network system, said mobile station comprising a geographical position localising module for localising a geographical position of said mobile station, storage means for storing geographical related base data, and display means for displaying geographical related data as a map and/or as a text string, characterised in that said geographical related data displayed on said display means has been at least partly provided by wireless transmission from said network station and is limited to a predeterminable extent depending on said geographical position of said mobile station, a mobile communication network system comprising such a mobile station and a method of operating such a mobile communication network system.

EP 1,126,732 describes a service provider system wherein a service provider provides service information dependent on location information of a mobile terminal to the mobile terminal in response to a service request with the location information sent by the mobile terminal. A communication control unit controls communication between the mobile terminal and the service provider. The communication control unit converts a user identifier of the mobile terminal in the service request to a temporary identifier for the communication.

According to a first aspect of the present invention, there is provided a method of obtaining a location dependent service in a mobile telecommunication network, the method including generating, in response to a request for service from a user, a data packet including data indicative of a location and transmitting this to a service provider, receiving the data packet from the service provider, to which has been added location dependent data comprising an indication of the location from the service provider; transmitting the data packet to the user, adding, in response to a further request for service from the user, a request for location data to the data packet, said data packet also including data derived from the location dependent data and including the indication of the location, and transmitting this data packet to a service provider, wherein the data packet includes identity information which identifies the user to the network but provides no information to the or each service provider which enables the or each service provider to directly access the user.

According to a second aspect of the present invention, there is provided a system for obtaining a location dependent service in a mobile telecommunication network, the system including means for generating, in response to a request for service from a user, a data packet including data indicative of a location and transmitting this data packet to a service provider, means for receiving location dependent data from the service provider, to which has been added location dependent data comprising an indication of the location from the service provider, means for transmitting the location dependent data to the user, and means for adding, in response to a further request for service from the user, a request for location data to the data packet, said data packet also including data derived from the location dependent data and including an indication of the location, and means for transmitting this data packet to a service provider, wherein the data packet includes identity information which identifies the user to the network but provides no information to the or each service provider which enables the or each service provider to directly access the user.

A method of and system for obtaining a location dependent service in a mobile telecommunication network will now be described by way of example only and with reference to the accompanying drawings, in which:
Figure 1 shows such a network; and
Figure 2 shows the exchange of data between various components in a mobile telecommunication network.

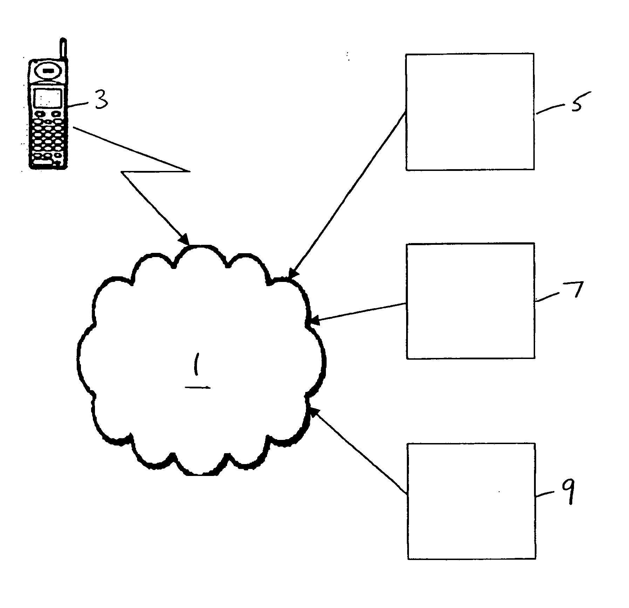

The Figure 1 shows a cellular telecommunications network 1 which provides wireless communication services to a mobile station 3 and to a multiplicity of other mobile stations (not shown). The network 1 may be a GSM or 3G (Third Generation) network or a similar cellular or other wireless network. Three application service providers 5, 7 and 9 provide services to users of the network 1 via their mobile station.

The services offered by the application service providers 5, 7 and 9 may be of various types. For example, they may be of the "subscription" or "non-subscription" type. A subscription-type service might be, for example, a traffic information service to which a particular user subscribes, paying an annual or monthly subscription fee, automatically being provided with periodic or irregular information concerning road traffic conditions relevant to the location of the user's vehicle at any time. The provision of such service requires data relating to the location of the user. Subscription-type services provide services on an on-going basis to subscriber users.

A non-subscription type service provides a single service to a user, normally on a commercial basis for a single payment. Such a service may also be dependent upon the user's current location. One example of such a non-subscription type service is the service provided by (or on behalf of) a chain of cinemas distributed geographically over all or part of the area covered by the network 1. Using this service, a user, in response to a specific real time request, can be provided by the relevant application service provider with directions to or the address of a cinema nearest to the user's current location (or another location selected by the user). For the provision of this information, the application service provider will make a (normally small) charge. The charge could be debited direct to the user. Instead, in a case where the application service provider is providing the service for the chain of cinemas, the charge might be debited to that chain in the form of an "introduction fee" for introducing that user to the particular outlet. Such charges may be debited by the network on behalf of the application service provider.

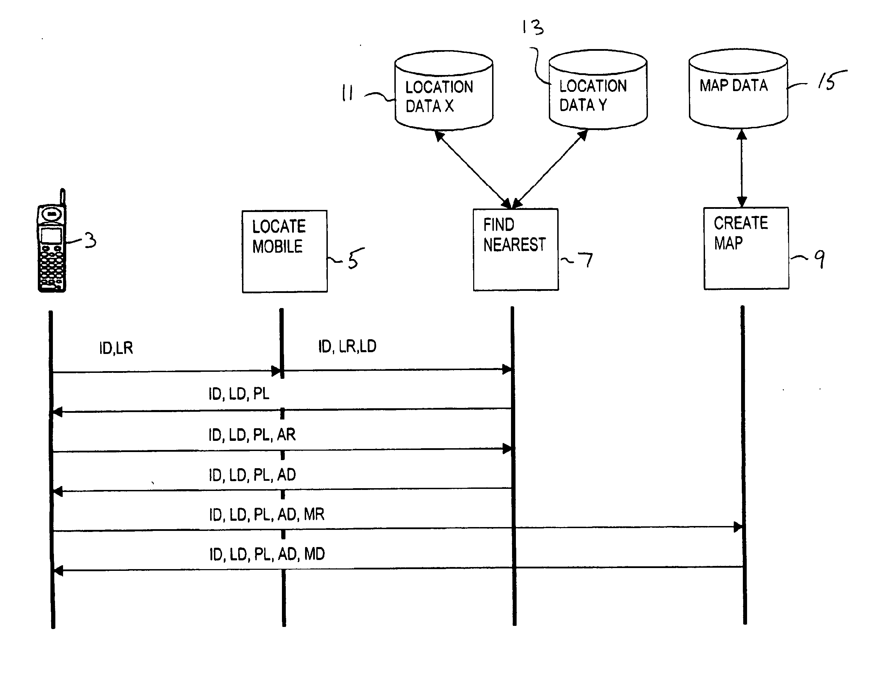

An embodiment of the invention in relation to a non-subscription service will now be described with particular reference to Figure 2, by way of example. It should of course be appreciated that the invention is also applicable to subscription services.

The user of mobile station 3 wishes to obtain details of their nearest cinema. The network 1 has an arrangement with the cinema whereby details of the cinemas in the chain, including information about their locations, are made available to the network in a database 11 via application service provider 7.

The mobile station 3 has a suitable user interface, such as a graphical user interface in the form of a menu from which options may be selected by operating the keys of the mobile station 3. The graphical user interface allows the user of the mobile station 3 to select, using the menu, the option to "find my nearest cinema". In response to this command, the mobile station 3 initiates a request for data to the network 1. The network 1 generates a "user tag" or data packet for transmission to application service provider 5 which is able to determine the location of mobile station 3 within the network 1 using, for example, signal strength data from base stations in the vicinity of mobile station 3. The user tag may be of the type described in WO-A-02/065804. The user tag may comprise: (I) an identification of the user; (II) an identification of the application service provider which is to be involved in the transaction (application service providers 5 and 7 in this case); (III) the time and date of the user's request; and (IV) information relating to the actual connection (mode, format etc.). The user tag need not include all this data, and may include other data.

The information identifying the user (ID) is encoded or encrypted in a suitable way so that the information which it contains is not accessible by the application service providers 5 or 7 though the user tag can be distinguished by the application service providers 5 or 7 from user tags relating to other user requests. Thus, for example, the user tag may comprise a multi digit number or have alphanumeric or any other suitable form. The information which it contains or represents remains accessible by the network operator. In addition to ID, and any of the other components mentioned above, the user tag further includes a location request LR, including data indicating that mobile station 3 requires the location of the nearest cinema. The user tag, comprising ID and LR is passed to application service provider 5 where the location of the mobile station 3 is determined using the data from the base stations in the network 1 (or by any other suitable means). Data relating to the location of the mobile terminal (LD) is then added to the user tag and onwardly transmitted to application service provider 7, in accordance with the instructions in data LR. The transmission of the user tag between the application service provider 5 and the application service provider 7 may be by wireless or wired communication. Application service provider 7 has access to databases 11 and 13. Database 11, as mentioned above, includes details of cinemas distributed within the area of coverage of network 1, including their location. The database may further include o ther useful information, such as the telephone numbers of the cinemas, the films showing at the cinemas, the times of the films, price information, etc. The data in database 11 may be provided by a third party - for example, by the cinemas themselves. The data in database 11 may be extracted from data already available, for example, from the Internet, such as the relevant cinema chain's website. Such data extraction may be performed automatically by, for example, automatically recognising post code data for each cinema entry in the cinema chain's website.

A further database may, for example, include details of pizza outlets distributed throughout the coverage area of network 1. A multiplicity of different databases may be provided, which provide details of services located within the coverage area of network 1. Data may be obtained by the mobile station 3 from any of these databases, in a similar manner to that being described in relation to database 11.

When the user tag, comprising ID, LR and LD is received by application service provider 7, the location of the mobile station 3, a represented by data LD, is extracted and database 11 is consulted to determine the nearest cinema to mobile station 3. This location data is then added to the user tag for transmission to the mobile station 3 via network 1. The place location data, PL, is transmitted to the mobile station 3 via the network 1. The data PL may comprise the street address of the cinema, the post code of the cinema, the map grid reference of the cinema, or any other suitable data identifying the location. Upon receipt of the data PL, the mobile station displays the location data of the cinema to the user of mobile station 3.

The application service provider 7, or the network 1, may remove the location request data LR from the user tag when the place location data PL has been obtained, as the location request data LR is no longer required.

The graphical user interface of a mobile station 3 may optionally, by providing an appropriately configured menu, allow the user to obtain further information about the cinema, such as the films showing, film times, prices etc. This information may be sent in the user tag at the same time as data PL, and the presence of this data will cause the graphical user interface of the mobile station 3 to generate appropriate menu options to allow this data to be accessed. Alternatively, the data may be obtained by sending the user tag to the application service provider 7 with an appropriate request for data. The sending of such a further request is not shown in the figure, for the sake of simplicity.

In accordance with a feature of the invention, by means of the graphical user interface menu, the user of mobile station 3 may then request further data dependent upon the location of the cinema (and thus data PL). For example, the graphical user interface of the mobile station 3 could offer the user the option to find a cash dispenser (ATM) or pub near to the cinema. The availability of this data may be indicated in the user tag returned from application service provider 7, and this indication causes the mobile station 3 to generate the relevant menu options. When such further location data is requested, this request for location data (AR) is added to the user tag and is transmitted to application service provider 7 (although it could be transmitted to a different application service provider). The application service provider 7 consults a further database 13 containing data relating to the location of ATM's in the vicinity of the location represented by data PL. This location information data (AD) is added to the user tag and the user tag is then transmitted to the mobile station 3 via the network 1.

The application service provider, or the network 1, may remove data AR from the user tag when the requested data AD has been provided, as the request data AR is no longer necessary or relevant.

Details of the location of the nearest ATM to the cinema can then be displayed to the user of mobile terminal 3.

Further services may be made available to the user of mobile station 3. For example, application service provider 7 may provide detailed routing information to the user of mobile station 3. To do this, the mobile station 3 generates, following a request by the user using the graphical user interface/menu, a user tag including data ID, LD, PL, AD and additional map request data (MR) which is transmitted to application service provider 9. The application service provider 9 receives the user tag and extracts data LD, PL and AD. The application service provider 9 consults database 15 which provides routing data between the locations represented by data LD,PL and AD and allows the calculation of the most favourable route from the current location of the mobile station (data LD) to the location of the cinema (data PL) and then the location of the ATM (data AD). The calculated route is added to the user tag as data MD and sent to the mobile station 3 via the network 1. The data request MR can be removed from the user tag by the application service provider 9 or the network 1 as it is no longer required.

Charging information to render a charge for obtaining information to the user of mobile station 3 (and/or to the cinema chain) can be obtained as the user tag is handled by the network 1 and/or the relevant application service provider.

In the embodiment described, the location of the user is determined by application service provider 5. However, the location data (LD) may instead be provided by the mobile station 3 (for example by being input by the user, or by a GPS capability of the mobile station 2), or by a third party.

The user tag may be valid for only a limited period of time to prevent the application service provider from accessing the mobile station 3 other than under the control of the network 1.

## Claims

1. A method of obtaining a location dependent service in a mobile telecommunication network (1), the method including:
generating, in response to a request for service from a user (LR), a data packet including data indicative of a location (LD) and transmitting this data packet to a service provider (7, 9),
receiving the data packet from the service provider (7, 9), to which has been added location dependent data (PL) comprising an indication of the location (LD);
transmitting the data packet to the user, the method further **characterised by**:
adding, in response to a further request for service from the user (AR), a request for location data to the data packet, said data packet also including data (AD) derived from the location dependent data and including the indication of the location (LD), and
transmitting this data packet to a service provider (5, 7, 9),
wherein the data packet includes identity information which identifies the user to the network but provides no information to the or each service provider [5,7,9] which enables the or each service provider [5,7,9] to directly access the user.

2. The method of claim 1, wherein the data packet includes data allowing it to be distinguished by the or each service provider (5, 7, 9) from data packets relating to other requests.

3. The method of claim 1 or claim 2, wherein the data packet is only effective for the or each service provider (5, 7, 9) for a length of time which is dependent upon the length of time for providing the service.

4. The method of any one of the preceding claims, wherein the location of the user is determined by the network (1).

5. The method of any one of the preceding claims, wherein the or each service provider (5, 7, 9) uses the data packet to request generation of charging information by the network (1) for the provision of the service.

6. The method of any one of the preceding claims, wherein the network (1) uses the data packet to identify the user in relation to which the charge is to be generated.

7. The method of any one of the preceding claims, wherein the data packet is encrypted.

8. A system for obtaining a location dependent service in a mobile telecommunication network (1), the system including
means for generating, in response to a request for service from a user (LR), a data packet including data indicative of a location (LD) and means for transmitting this data packet to a service provider (7, 9),
means for receiving the data packet from the service provider (7, 9), to which has been added location dependent data (PL) comprising an indication of the location (LD)
means for transmitting the data packet to the user,
the system further **characterized by**
means for adding, in response to a further request for service from the user (AR), a request for location data to the data packet, said data packet also including data (AD) derived from the location dependent data and including an indication of the location (LD), and
means for transmitting this data packet to a service provider (5, 7, 9), wherein the data packet includes identity information for identifying the user to the network (1) but does not provide information to the or each service provider (5, 7, 9) for enabling the or each service provider (5, 7, 9) to directly access the user.

9. The system of claim 8, wherein the data packet includes data allowing it to be distinguished by the or each service provider (5, 7, 9) from data packets relating to other requests.

10. The system of claim 8 or claim 9, wherein the data packet is only effective for the or each service provider (5, 7, 9) for a length of time which is dependent upon the length of time for providing the service.

11. The system of any one of claims 8-10, wherein the location of the user is determined by the network (1).

12. The system of any one of claims 8-11, wherein the or each service provider (5, 7, 9) has means for using the data packet to request generation of charging information by the network (1) for the provision of the service.

13. The system of any one of claims 8-12, wherein the network (1) has means for using the data packet to identify the user in relation to which the charge is to be generated.

14. The system of any one of claims 8-13, wherein the data packet is encrypted.

## Patentansprüche

1. Verfahren zum Erwerben eines ortsabhängigen Dienstes in einem mobilen Telekommunikationsnetz (1), wobei das Verfahren Folgendes beinhaltet:
Erzeugen, als Reaktion auf eine Diensteanforderung von einem Benutzer (LR), eines Datenpakets mit Daten, die einen Ort (LD) anzeigen, und Senden dieses Datenpakets zu einem Diensteanbieter (7, 9),
Empfangen des Datenpakets, dem ortsabhängige Daten (PL) hinzugefügt wurden, die eine Anzeige des Ortes (LD) beinhalten, vom Diensteanbieter (7, 9);
Senden des Datenpakets zum Benutzer,
wobei das Verfahren ferner **gekennzeichnet ist durch**:
Hinzufügen, als Reaktion auf eine weitere Diensteanforderung vom Benutzer (AR), einer Ortsdatenanforderung zu dem Datenpaket, wobei das genannte Datenpaket auch Daten (AD) enthält, die von den ortsabhängigen Daten abgeleitet sind und die die Anzeige des Ortes (LD) enthalten, und
Senden dieses Datenpakets zu einem Diensteanbieter (5, 7, 9),
wobei das Datenpaket Identitätsinformationen enthält, die dem Netzwerk den Benutzer identifizieren, aber dem oder jedem Diensteanbieter (5, 7, 9) keine Informationen geben, die es dem oder jedem Diensteanbieter (5, 7, 9) ermöglichen würden, direkt auf den Benutzer zuzugreifen.

2. Verfahren nach Anspruch 1, wobei das Datenpaket Daten enthält, die eine Unterscheidung des Datenpakets durch den oder jeden Diensteanbieter (5, 7, 9) von Datenpaketen in Bezug auf andere Anforderungen ermöglichen.

3. Verfahren nach Anspruch 1 oder Anspruch 2, wobei das Datenpaket nur für den oder jeden Diensteanbieter (5, 7, 9) für eine Zeitdauer effektiv ist, die von der Zeitdauer zum Bereitstellen des Dienstes abhängig ist.

4. Verfahren nach einem der vorherigen Ansprüche, wobei der Ort des Benutzers vom Netzwerk (1) bestimmt wird.

5. Verfahren nach einem der vorherigen Ansprüche, wobei der oder jeder Diensteanbieter (5, 7, 9) das Datenpaket zum Anfordern der Erzeugung von Gebühreninformationen durch das Netzwerk (1) für die Bereitstellung des Dienstes benutzt.

6. Verfahren nach einem der vorherigen Ansprüche, wobei das Netzwerk (1) das Datenpaket zum Identifizieren des Benutzers benutzt, mit Bezug auf den die Gebühr erzeugt werden soll.

7. Verfahren nach einem der vorherigen Ansprüche, wobei das Datenpaket verschlüsselt ist.

8. System zum Erwerben eines ortsabhängigen Dienstes in einem mobilen Telekommunkationsnetz (1), wobei das System Folgendes umfasst:
Mittel zum Erzeugen, als Reaktion auf eine Diensteanforderung von einem Benutzer (LR), eines Datenpakets mit Daten, die einen Ort (LD) anzeigen, und Mittel zum Senden dieses Datenpakets zu einem Diensteanbieter (7,9),
Mittel zum Empfangen des Datenpakets, dem ortsabhängige Daten (PL) hinzugefügt wurden, die eine Anzeige des Ortes (LD) umfassen, vom Diensteanbieter (7, 9);
Mittel zum Senden des Datenpakets zum Benutzer,
wobei das System ferner **gekennzeichnet ist durch**:
Mittel zum Hinzufügen, als Reaktion auf eine weitere Diensteanforderung vom Benutzer (AR), einer Ortsdatenanforderung zu dem Datenpaket, wobei das genannte Datenpaket auch Daten (AD) beinhaltet, die von den ortsabhängigen Daten abgeleitet sind und eine Anzeige des Ortes (LD) enthalten, und
Mittel zum Senden dieses Datenpakets zu einem Diensteanbieter (5, 7, 9),
wobei das Datenpaket Identitätsinformationen enthält, um den Benutzer dem Netzwerk (1) zu identifizieren, dem oder jedem Diensteanbieter (5, 7, 9) aber keine Informationen gibt, die es dem oder jedem Diensteanbieter (5, 7, 9) ermöglichen würden, direkt auf den Benutzer zuzugreifen.

9. System nach Anspruch 8, wobei das Datenpaket Daten enthält, die dem oder jedem Diensteanbieter (5, 7, 9) eine Unterscheidung des Datenpakets von Datenpaketen in Bezug auf andere Anforderungen ermöglichen.

10. System nach Anspruch 8 oder 9, wobei das Datenpaket nur für den oder jeden Diensteanbieter (5, 7, 9) für eine Zeitdauer effektiv ist, die von der Zeitdauer zum Bereitstellen des Dienstes abhängig ist.

11. System nach einem der Ansprüche 8-10, wobei der Ort des Benutzers vom Netzwerk (1) bestimmt wird.

12. System nach einem der Ansprüche 8-11, wobei der oder jeder Dienstanbieter (5, 7, 9) Mittel zum Benutzen des Datenpakets zum Anfordern der Erzeugung von Gebühreninformationen durch das Netzwerk (1) für die Bereitstellung des Dienstes hat.

13. System nach einem der Ansprüche 8-12, wobei das Netzwerk (1) Mittel zum Benutzen des Datenpakets zum Identifizieren des Benutzers hat, in Bezug auf den die Gebühr erzeugt werden soll.

14. System nach einem der Ansprüche 8-13, wobei das Datenpaket verschlüsselt ist.

## Revendications

1. Procédé d'obtention d'un service dépendant de la localisation dans un réseau de télécommunications mobiles (1), le procédé comprenant les opérations consistant à :
en réponse à une demande de service émanant d'un utilisateur (LR), générer un paquet de données englobant des données qui indiquent une localisation (LD) et transmettre ce paquet de données à un fournisseur de services (7, 9),
recevoir le paquet de données provenant du fournisseur de services (7, 9), auquel ont été ajoutées des données dépendantes de la localisation (PL) lesquelles comportent une indication de la localisation (LD) ;
transmettre le paquet de données à l'utilisateur,
le procédé étant **caractérisé en outre par** les opérations consistant à :
en réponse à une demande supplémentaire de service émanant de l'utilisateur (AR), ajouter une demande de données de localisation au paquet de données, ledit paquet de données englobant également des données (AD) lesquelles ont été dérivées des données dépendantes de la localisation et englobant l'indication de la localisation (LD), et
transmettre ce paquet de données à un fournisseur de services (5, 7, 9),
cas dans lequel le paquet de données inclut des informations identitaires qui identifient l'utilisateur par rapport au réseau, mais ne procurent aucune information au fournisseur de services ou à chaque fournisseur de services (5, 7, 9) qui permette au fournisseur de services ou à chaque fournisseur de services (5, 7, 9) d'avoir directement accès à l'utilisateur.

2. Procédé selon la revendication 1, le paquet de données incluant des données qui permettent au fournisseur de services ou à chaque fournisseur de services (5, 7, 9) de le distinguer des paquets de données relatifs à d'autres demandes.

3. Procédé selon la revendication 1 ou la revendication 2, le paquet de données n'étant effectif pour le fournisseur de services ou chaque fournisseur de services (5, 7, 9) que pendant un intervalle de temps qui est subordonné à l'intervalle de temps nécessaire pour fournir le service.

4. Procédé selon l'une quelconque des revendications précédentes, la localisation de l'utilisateur étant déterminée par le réseau (1).

5. Procédé selon l'une quelconque des revendications précédentes, le fournisseur de services ou chaque fournisseur de services (5, 7, 9) utilisant le paquet de données afin de demander la génération d'informations de taxation par le réseau (1) pour la fourniture du service.

6. Procédé selon l'une quelconque des revendications précédentes, le réseau (1) utilisant le paquet de données afin d'identifier l'utilisateur par rapport auquel la taxation est censée être générée.

7. Procédé selon l'une quelconque des revendications précédentes, le paquet de données étant crypté.

8. Système destiné à obtenir un service dépendant de la localisation dans un réseau de télécommunications mobiles (1), le système comprenant :
des moyens pour générer, en réponse à une demande de service émanant d'un utilisateur (LR), un paquet de données englobant des données qui indiquent une localisation (LD) et des moyens pour transmettre ce paquet de données à un fournisseur de services (7, 9),
des moyens pour recevoir le paquet de données provenant du fournisseur de services (7, 9), auquel ont été ajoutées des données dépendantes de la localisation (PL) lesquelles comportent une indication de la localisation (LD) ;
des moyens pour transmettre le paquet de données à l'utilisateur,
le système étant **caractérisé en outre par**
des moyens pour ajouter, en réponse à une demande supplémentaire de service émanant de l'utilisateur (AR), une demande de données de localisation au paquet de données, ledit paquet de données englobant également des données (AD) lesquelles ont été dérivées des données dépendantes de la localisation et englobant une indication de la localisation (LD), et
des moyens pour transmettre ce paquet de données à un fournisseur de services (5, 7, 9),
cas dans lequel le paquet de données inclut des informations identitaires destinées à identifier l'utilisateur par rapport au réseau (1), mais ne procurent pas d'informations au fournisseur de services ou à chaque fournisseur de services (5, 7, 9) permettant au fournisseur de services ou à chaque fournisseur de services (5, 7, 9) d'avoir directement accès à l'utilisateur.

9. Système selon la revendication 8, le paquet de données incluant des données qui permettent au fournisseur de services ou à chaque fournisseur de services (5, 7, 9) de le distinguer des paquets de données relatifs à d'autres demandes.

10. Système selon la revendication 8 ou la revendication 9, le paquet de données n'étant effectif pour le fournisseur de services ou chaque fournisseur de services (5, 7, 9) que pendant un intervalle de temps qui est subordonné à l'intervalle de temps nécessaire pour fournir le service.

11. Système selon l'une quelconque des revendications 8 à 10, la localisation de l'utilisateur étant déterminée par le réseau (1).

12. Système selon l'une quelconque des revendications 8 à 11, le fournisseur de services ou chaque fournisseur de services (5, 7, 9) disposant de moyens lui permettant d'utiliser le paquet de données afin de demander la génération d'informations de taxation par le réseau (1) pour la fourniture du service.

13. Système selon l'une quelconque des revendications 8 à 12, le réseau (1) disposant de moyens pour utiliser le paquet de données afin d'identifier l'utilisateur par rapport auquel la taxation est censée être générée.

14. Système selon l'une quelconque des revendications 8 à 13, le paquet de données étant crypté.
